# EUROPÄISCHE PATENTSCHRIFT

(11) **EP 1 936 137 B1**
(45) Veröffentlichungstag und Bekanntmachung des Hinweises auf die Patenterteilung: **17.06.2009**
(21) Anmeldenummer: 07020392.2
(22) Anmeldetag: 18.10.2007
(51) Int. Cl.: F01N 3/20, B01D 53/90

(54) **Vorrichtung zum Zumischen eines Reduktionsmittels in einen Abgasstrom einer Brennkraftmaschine**
Device for adding a reducing agent to a flue gas stream of a combustion engine
Dispositif destiné à mélanger un moyen de réduction dans un flux de gaz d'échappement d'un moteur à combustion interne

(30) Priorität: 12.12.2006 DE 102006058402
(43) Veröffentlichungstag der Anmeldung: 25.06.2008
(73) Patentinhaber: Bayerische Motoren Werke Aktiengesellschaft, 80809 München (DE)
(72) Erfinder: Nefischer, Peter, Dr., 4320 Perg (AT)

(56) Entgegenhaltungen:
- EP-A- 1 054 139
- EP-A- 1 712 756
- JP-A- 9 096 212
- JP-A- 2006 017 043
- US-A1- 2003 070 424
- US-A1- 2006 016 176

## Beschreibung

Die Erfindung betrifft eine Vorrichtung zum Zumischen eines Reduktionsmittels in einen Abgasstrom einer Brennkraftmaschine mit den Merkmalen aus dem Oberbegriff des Patentanspruchs 1.

Aus der europäischen Patentanmeldung EP 1 712 756 A1, von der die vorliegende Erfindung ausgeht, ist eine Vorrichtung zum Zumischen eines Reduktionsmittels in einen Abgasstrom einer Brennkraftmaschine mit einem Abgasstrang bekannt. Weiter weist die Vorrichtung eine Dosiervorrichtung zur Zuführung des Reduktionsmittels in den Abgasstrang auf. In dem Abgasstrang, stromab der Dosiervorrichtung, ist ein von dem Abgas aufheizbarer Reduktionsmittelmischer vorgesehen, dessen Heizrippen teilweise in der Strömungsrichtung des Abgases ausgerichtet angeordnet sind, wobei die Heizrippe in einem separaten, in dem Abgasstrang anordenbaren Rohr angeordnet sind. Weiter ist die Dosiervorrichtung an einem an den Abgasstrang angeordneten Hohlkörper anordenbar, wobei dessen Innenvolumen abgasführend mit dem Abgasstrang verbunden ist. Beim Betrieb der Brennkraftmaschine wird dem Abgasstrom mittels der Dosiervorrichtung ein Reduktionsmittel beigegeben, um insbesondere die NOₓ-Emissionen zu reduzieren.

Der Erfindung liegt die Aufgabe zugrunde, die Reduktionsmittelvermischung mit dem Abgas weiter zu verbessern.

Diese Aufgabe wird erfindungsgemäß durch die Merkmale im kennzeichnenden Teil des Patentanspruchs 1 dadurch gelöst, dass das Reduktionsmittel mit der Dosiervorrichtung durch den Hohlkörper unter einem Winkel zwischen 20° und 90° auf die Heizrippen aufbringbar ist und dass die Heizrippen versetzt und bezüglich der Dosiervorrichtung derart angeordnet sind, dass das in den Abgasstrang zugeführte Reduktionsmittel weitgehend zeitgleich auf den Heizrippen auftrifft.

Durch die die erfndungsgemäße Ausgestaltung wird eine gleichzeitige Verdampfung des Reduktionsmittels auf den Heizrippen erzielt.

Die Ausgestaltung gemäß Patentanspruch 2 weist die geringsten Strömungsverluste auf.

Die Ausgestaltungen gemäß der Patentansprüche 3 und 4 verbessern den Wirkungsgrad der Vorrichtung.

Die Ausgestaltung gemäß Patentanspruch 5 ist eine besonders montagefreundliche Ausgestaltungsvariante.

Im Folgenden ist die Erfindung anhand eines besonders bevorzugten Ausführungsbeispieles in zwei Figuren näher erläutert.
- Fig. 1: zeigt einen Schnitt durch eine erfindungsgemäße Vorrichtung zum Zumischen eines Reduktionsmittels in einen Abgasstrom einer Brennkraftmaschine.
- Fig. 2: zeigt die Aufsicht auf eine dreidimensional dargestellte Verdampfungseinheit.

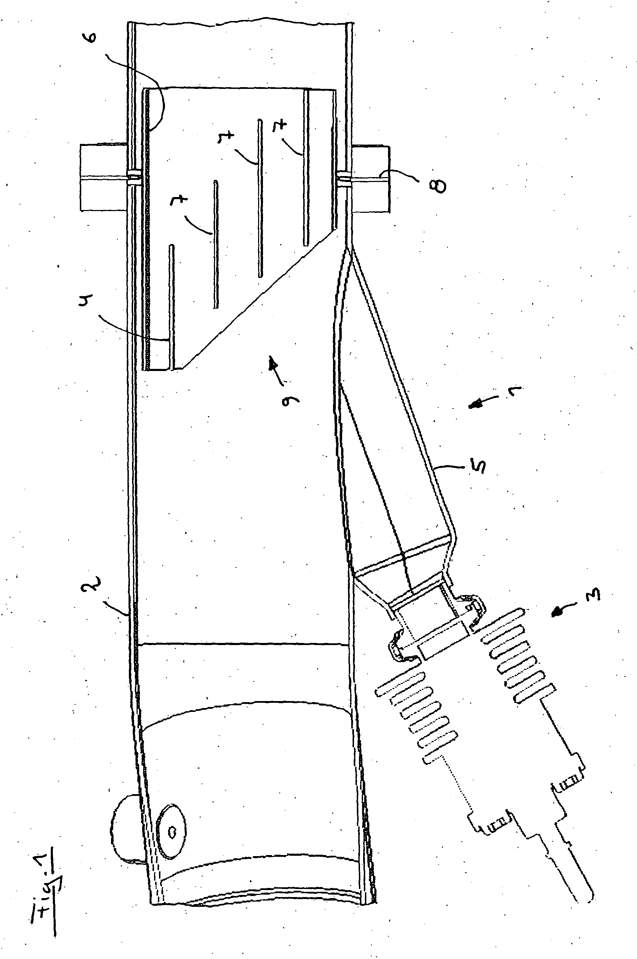

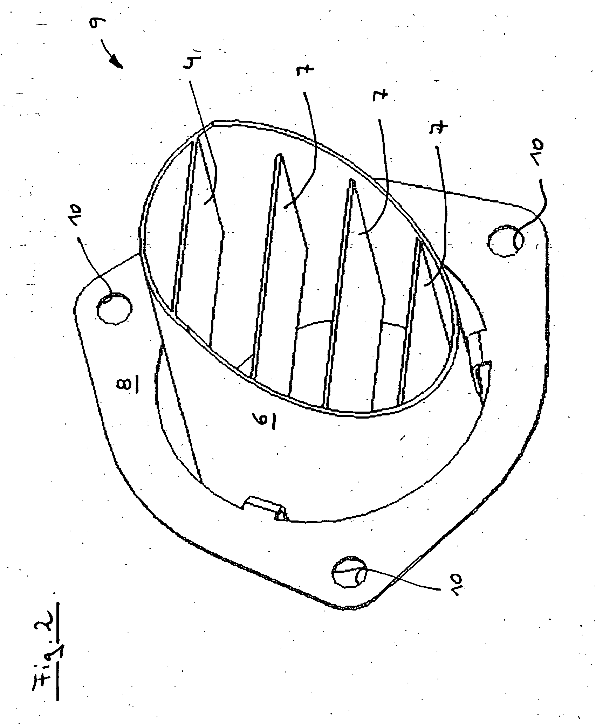

In den Fig. 1 und Fig. 2 gelten für gleiche Bauelemente die gleichen Bezugsziffern.

Fig. 1 zeigt einen Schnitt durch eine erfindungsgemäße Vorrichtung 1 zum Zumischen eines Reduktionsmittels in einen Abgasstrom einer nicht dargestellten Brennkraftmaschine mit einem Abgasstrang 2. In dem Abgasstrang 2 ist eine Verdampfungseinheit 9 angeordnet, die über einen Flansch 8 mit dem Abgasstrang 2 verbindbar ist. Eine Strömungsrichtung des Abgases ist durch einen Pfeil in dem Abgasstrang 2 schematisch dargestellt. Stromauf der Verdampfungseinheit 9 ist an den Abgasstrang 2 ein Hohlkörper 5 angeordnet, an dessen von dem Abgasstrang 2 abgewandten Ende eine Dosiervorrichtung 3 für das Reduktionsmittel angeordnet ist. Im vorliegenden Ausführungsbeispiel sind der Hohlkörper 5 und die Dosiervorrichtung 3 unter einem Winkel von ca. 30° zur Abgasströmungsrichtung ausgerichtet. In weiteren Ausführungsbeispielen kann dieser Winkel jedoch auch zwischen 20° und 90° betragen.

Das Innenvolumen des Hohlkörpers 5 ist mit dem Abgasstrang 2 gasführend verbunden, so dass in den Hohlkörper 5 abgespritztes Reduktionsmittel in den Abgasstrang 2 eindringen kann und auf der Verdampfungseinheit 9 zerstäubt und verdampft wird. Im einfachsten Fall weist die Verdampfungseinheit 9 eine einzige Heizrippe 4 in einem koaxial zu dem Abgasstrang 2 angeordneten Rohr 6 auf, wobei die Heizrippe 4 zur Minimierung des Strömungswiderstandes weitgehend in Strömungsrichtung des Abgases ausgerichtet ist. Im vorliegenden, besonders bevorzugten Ausführungsbeispiel, weist die Verdampfungseinheit 9 die Heizrippe 4 sowie drei weitere Heizrippen 7 auf, die parallel zueinander in dem Rohr 6 angeordnet sind.

Auch die weiteren Heizrippen 7 sind zur Minimierung des Strömungswiderstandes weitgehend in Strömungsrichtung des Abgases ausgerichtet und werden beim Betrieb der Brennkraftmaschine von dem heißen Abgas aufgeheizt. Weiter sind die Heizrippen 4, 7 derart bezüglich der Dosiervorrichtung angeordnet, dass das in den Abgasstrang eingespritzte Reduktionsmittel weitgehend zeitgleich auf den Heizrippen 4, 7 auftrifft. Idealer Weise sind die Heizrippen 4, 7 plan ausgeformt. Um den Wirkungsgrad der Verdampfungseinheit 9 weiter zu verbessern, können die Heizrippen 4, 7 auch eine Oberflächenstruktur aufweisen, wobei die Oberflächenstruktur maximal 3 mm aus der planen Oberfläche herausragt. Hieraus resultiert jedoch in nachteiliger Weise ein größerer Strömungswiderstand für das Abgas. Für eine möglichst einfache Montage der Verdampfungseinheit 9 in den Abgasstrang 2 weist die Verdampfungseinheit 9 einen radial außen angeordneten Flansch 8 auf.

Fig. 2 zeigt die Aufsicht auf eine dreidimensional dargestellte Verdampfungseinheit 9 mit einer Heizrippe 4 und drei weiteren Heizrippen 7. Wie zu Fig. 1 bereits ausgeführt ist, weist die Verdampfungseinheit 9 radial außen liegend den Flansch 8 auf, der weitgehend senkrecht zu der Strömungsrichtung des Abgases im Abgasstrang 2 ausgerichtet ist. Für die Montage der Verdampfungseinheit 9 in den Abgasstrang 2 weist der Flansch 8 drei Montagebohrungen 10 auf.

Die Verdampfungseinheit 9 und der Flansch 8 sind vorzugsweise aus einem Stahlblech gefertigt, jedoch können auch andere hochtemperaturfeste Materialien, wie beispielsweise Keramiken, zum Einsatz kommen. Der Flansch 8 ist seinerseits über kleine, nicht bezifferte Flansche an dem Rohr 6 angeordnet, in dem wiederum die Heizrippen 4, 7 angeordnet sind. Somit ist die Verdampfungseinheit 9 eine kompakte eigenständige Baugruppe, die auch nachträglich in Angasstränge 2 nachgerüstet werden kann.

Der Hohlkörper 5 weist vorzugsweise einen Außenradius auf, der maximal dem Außenradius des Abgasstranges 2 entspricht. Je nach baulicher Ausführung der Dosiervorrichtung 3 kann die Ankopplung der Dosiervorrichtung 3 an den Hohlkörper 5 variieren. Im vorliegenden Ausführungsbeispiel ist der Hohlkörper 5 konusförmig ausgeformt, in anderen Ausführungsbeispielen kann er jedoch auch rohrförmig ausgeformt sein. Der Hohlkörper 5 wird vorzugsweise aus dem gleichen Material, wie z. B. Edelstahl, gefertigt wie der Abgasstrang 2.

Durch die erfindungsgemäße Ausgestaltung der Vorrichtung zum Zumischen eines Reduktionsmittels in einen Abgasstrom einer Brennkraftmaschine wird ein äußerst geringer Strömungswiderstand erzielt, bei gleichzeitig sehr gutem Wirkungsgrad.

### Bezugszeichenliste:

- 1.: Vorrichtung
- 2.: Abgasstrang
- 3.: Dosiervorrichtung
- 4.: Heizrippe
- 5.: Hohlkörper
- 6: Rohr
- 7.: weitere Heizrippe
- 8.: Flansch
- 9.: Verdampfungseinheit
- 10.: Montagebohrung

## Patentansprüche

1. Vorrichtung (1) zum Zumischen eines Reduktionsmittels in einen Abgasstrom einer Brennkraftmaschine mit einem Abgasstrang (2), mit einer Dosiervorrichtung (3) zur Zuführung des Reduktionsmittels in den Abgasstrang (2) und von dem Abgas aufheizbaren, stromab der Dosiervorrichtung (3), in dem Abgasstrang (2) parallel angeordneten Heizrippen (4, 7), wobei die Heizrippen (4, 7) weitgehend in einer Strömungsrichtung des Abgases ausgerichtet angeordnet sind und wobei die Heizrippen (4, 7) in einem separaten, in dem Abgasstrang (2) anordenbaren Rohr (6) angeordnet sind, wobei die Dosiervorrichtung (3) in oder an einem an den Abgasstrang(2) angeordneten Hohlkörper (5) angeordnet ist, dessen Innenvolumen abgasführend mit dem Abgasstrang (2) verbunden ist,
**dadurch gekennzeichnet, dass** das Reduktionsmittel mit der Dosiervorrichtung (3) durch den Hohlkörper (5) unter einem Winkel wischen 20° und 90° auf die Heizrippen (4, 7) aufbringbar ist und dass die Heizrippen (4, 7) versetzt und bezüglich der Dosiervorrichtung (3) derart angeordnet sind, dass das in den Abgasstrang zugeführte Reduktionsmittel weitgehend zeitgleich auf den Heizrippen (4, 7) auftrifft.

2. Vorrichtung nach Patentanspruch 1,
**dadurch gekennzeichnet, dass** die Heizrippe (4, 7, 7') eine weitgehend plane Oberfläche aufweist.

3. Vorrichtung nach Patentanspruch 1 oder 2,
**dadurch gekennzeichnet, dass** die Heizrippe (4, 7, 7') eine Oberflächenstruktur aufweist.

4. Vorrichtung nach Patentanspruch 3,
**dadurch gekennzeichnet, dass** die Oberflächenstruktur maximal 3 mm aus der planen Oberfläche herausragt.

5. Vorrichtung nach einem der zuvor genannten Patentansprüche;
**dadurch gekennzeichnet, dass** das Rohr (6) einen Flansch (8) für eine Befestigung an den Abgasstrang (2) aufweist.

## Claims

1. A device (1) for adding a reducing agent to a stream of exhaust gas from an internal combustion engine, comprising an exhaust pipe (2) with a metering device (3) for supplying the reducing agent to the exhaust pipe (2), and parallel heating ribs (4, 7) disposed in the exhaust pipe (2) downstream of the metering device (3) and heatable by the exhaust gas, wherein the heating ribs (4, 7) are aligned substantially in a direction of flow of the exhaust gas and wherein the heating ribs (4, 7) are disposed in a separate tube (6) disposed in the exhaust pipe (2), wherein the metering device (3) is disposed in or on a hollow member (5) disposed on the exhaust pipe (2), the interior of the hollow member (5) being connected to the exhaust pipe (2) so as to convey exhaust gas,
**characterised in that** the reducing agent is supplied to the ribs (4, 7) by the metering device (3) through the hollow member (5) at an angle between 20° and 90° and the ribs (4, 7) are offset and so disposed relative to the metering device (3) that the reducing agent supplied to the exhaust pipe simultaneously strikes the heating ribs (4, 7).

2. A device according to claim 1,
**characterised in that** the rib (4, 7, 7') has a substantially flat surface.

3. A device according to claim 1 or claim 2,
**characterised in that** the rib (4, 7, 7') has a surface structure.

4. A device according to claim 3,
**characterised in that** the surface structure projects up to 3 mm from the flat surface.

5. A device according to any of the previously-mentioned claims,
**characterised in that** the tube (6) has a flange (8) for fastening to the exhaust pipe (2).

## Revendications

1. Dispositif (1) pour ajouter un agent réducteur à une veine de gaz d'échappement d'un moteur à combustion interne comportant une conduite de gaz d'échappement (2), un dispositif de dosage (3) pour fournir l'agent réducteur à la conduite de gaz d'échappement (2) et des ailettes parallèles (4, 7), chauffées par les gaz d'échappement, installées en aval du dispositif de dosage (3) dans la conduite de gaz d'échappement (2),
les ailettes chauffées (4, 7) sont pratiquement alignées dans la direction de passage des gaz d'échappement,
les ailettes chauffées (4, 7) sont montées dans un tube (6) séparé, installé dans la conduite des gaz d'échappement (2),
le dispositif de dosage (3) est prévu dans ou sur un organe creux (5), installé sur la conduite des gaz d'échappement (2), et son volume intérieur est relié à la conduite des gaz d'échappement (2), pour les guider,
**caractérisé en ce que**
l'agent réducteur est fourni aux ailettes chauffées (4, 7) par le dispositif de dosage (3) à travers le corps creux (5) sous un angle compris entre 20° et 90°, et
les ailettes chauffées (4, 7) sont installées, en décalage par rapport au dispositif de dosage (3) pour que l'agent réducteur, fourni à la veine des gaz d'échappement, arrive pratiquement simultanément sur les ailettes chauffées (4, 7).

2. Dispositif selon la revendication 1,
**caractérisé en ce que**
les ailettes chauffées (4, 7, 7') ont une surface supérieure pratiquement plane.

3. Dispositif selon les revendications 1 ou 2,
**caractérisé en ce que**
les ailettes chauffées (4, 7, 7') ont une surface supérieure structurée.

4. Dispositif selon la revendication 3,
**caractérisé en ce que**
la surface structurée dépasse au maximum de 3 mm par rapport à la surface supérieure plane.

5. Dispositif selon l'une des revendications précédentes,
**caractérisé en ce que**
le tube (6) comporte une bride (8) pour sa fixation à la conduite des gaz d'échappement (2).
